(19)

Europäisches
Patentamt
European
Patent Office
Office européen
des brevets

(11) **EP 4 576 538 A1**

(12) **EUROPEAN PATENT APPLICATION**

(43) Date of publication:
**25.06.2025 Bulletin 2025/26**

(21) Application number: **24217414.2**

(22) Date of filing: **04.12.2024**

(51) International Patent Classification (IPC):
**H02M 3/155** $^{(2006.01)}$ **H02M 1/15** $^{(2006.01)}$
**H02M 3/158** $^{(2006.01)}$ **H02M 3/335** $^{(2006.01)}$
**H02M 7/501** $^{(2007.01)}$ **H02M 7/49** $^{(2007.01)}$

(52) Cooperative Patent Classification (CPC):
**H02M 3/155; H02M 3/335;** H02M 1/0058;
H02M 1/0074; H02M 1/0093; H02M 1/0095;
H02M 1/15; H02M 3/015; H02M 3/1584;
H02M 3/33573; H02M 3/33584; H02M 7/4835;
H02M 7/49; H02M 7/501

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.12.2023 GB 202319594**

(71) Applicant: **Rolls-Royce plc**
**London N1 9FX (GB)**

(72) Inventors:
• **Briff, Pablo A**
**Derby, DE24 8BJ (GB)**
• **Trainer, David R**
**Derby, DE24 8BJ (GB)**
• **Jamieson, Ross A**
**Derby, DE24 8BJ (GB)**
• **Sweet, Mark R**
**Derby, DE24 8BJ (GB)**

(74) Representative: **Rolls-Royce plc**
**P.O. Box 31**
**IP Department (SinA-48)**
**Derby Derbyshire DE24 8BJ (GB)**

(54) **DC:DC POWER CONVERTER**

(57) A DC:DC power converter 10, an electrical power system 100 comprising a DC:DC power converter 10, and a method 500 of operating an electrical power system 100 are described. The DC:DC power converter 10 comprises: a DC:AC converter circuit 11; an AC:DC converter circuit 12; an AC link 13 that connects an AC side of the DC:AC converter circuit 11 to an AC side of the AC:DC converter circuit 12 and has an impedance synthesizer 14 connected therein, the impedance synthesizer 14 comprising an active bridge circuit 140; and a switching controller 15 configured to control a switching operation of a plurality of power semiconductor switches $141_{L,H}$, $142_{L,H}$ of the active bridge circuit 140 and thereby control an output voltage of the impedance synthesizer 14 and an impedance of the AC link 13.

*FIG. 2A*

EP 4 576 538 A1

## Description

## TECHNICAL FIELD

This disclosure relates to a DC:DC power converter, an electrical power system comprising a DC:DC power converter and a method of controlling an electrical power system comprising a DC:DC power converter.

## BACKGROUND

A DC:DC power converter may be used to interface between two DC parts of an electrical power system. For example, an electrical power system may have two DC electrical networks with different operating voltages, and a DC:DC converter may provide an interface between the two networks so that power can be exchanged between them. In another example, an electrical power system may include a DC electrical network that is supplied with power by an energy storage system (e.g., a battery). The terminal voltage of a battery typically decreases with its state of charge, so a DC:DC converter may be provided between the terminals of the energy storage system and the DC electrical network to stabilise the voltage supplied to the DC electrical network as the battery discharges.

## SUMMARY

According to a first aspect, there is a DC:DC power converter, comprising:

a DC:AC converter circuit;
an AC:DC converter circuit;
an AC link that connects an AC side of the DC:AC converter circuit to an AC side of the AC:DC converter circuit and has an impedance synthesizer connected therein, the impedance synthesizer comprising an active bridge circuit;
a switching controller configured to control a switching operation of a plurality of power semiconductor switches of the active bridge circuit and thereby control an output voltage of the impedance synthesizer and an impedance of the AC link.

In an embodiment, the active bridge circuit of the impedance synthesizer is a full-bridge circuit. In another embodiment, the active bridge circuit is a half-bridge circuit. In yet another embodiment, the active bridge circuit is an H-bridge circuit.

In an embodiment, each of the DC:AC converter circuit and the AC:DC converter circuit comprises an active bridge circuit, each active bridge circuit comprising a plurality power semiconductor switches.

In an embodiment, a circuit topology of the active bridge circuit of the impedance synthesizer is the same as a circuit topology of the active bridge circuit of the DC:AC converter circuit and a circuit topology of the active bridge circuit of the AC:DC converter circuit. For example, the DC:AC converter circuit, the AC:DC converter circuit and the active bridge circuit of the impedance synthesizer may each be a two-level full-bridge converter circuit having two half-bridges, may each be or a two-level, three-phase converter circuit having three half-bridges, or may each be an H-bridge circuit.

In an embodiment, each of the DC:AC converter circuit and the AC:DC converter circuit comprises a plurality of semiconductor switches; and the switching controller is configured to switch the plurality of power semiconductor switches of the impedance synthesizer at a frequency that is higher than a frequency at which the plurality of power semiconductor switches of the DC:AC converter circuit and the AC:DC converter circuit are switched.

In an embodiment, the impedance synthesizer comprises a plurality of parallel-connected active bridge circuits, each of the plurality active bridge circuits comprising a plurality of power semiconductor switches; and the switching controller is configured to control a switching operation of the plurality of power semiconductor switches of each of the plurality of active bridge circuits and thereby control the output voltage of the impedance synthesizer and the impedance of the AC link.

In an embodiment, the switching controller is configured to time-interleave the switching operation of the plurality of active bridge circuits of the impedance synthesizer.

In an embodiment, the plurality of parallel-connected active bridge circuits of the impedance synthesizer comprises P groups of Q active bridge circuits, P and Q being integers greater than one; and the switching controller is configured to temporally synchronize the switching operation of the Q active bridge circuits of each group and time-interleave the switching operation of the P groups.

In an embodiment, the impedance synthesizer comprises a plurality of series-connected active bridge circuits, each of the plurality of active bridge circuits comprising a plurality of power semiconductor switches; and the switching controller is configured to control a switching operation of the plurality of power semiconductor switches of each of the plurality of active bridge circuits and thereby control the output voltage of the impedance synthesizer and the impedance of the AC link.

In an embodiment, the impedance synthesizer comprises a plurality of series-connected cells, each cell comprising a plurality of parallel-connected active bridge circuits, each of the plurality active bridge circuits comprising a plurality of power semiconductor switches; and the switching controller is configured to control a switching operation of the plurality of power semiconductor switches of each of the plurality of active bridge circuits and thereby control the output voltage of the impedance synthesizer and the impedance of the AC link.

In an embodiment, the DC:DC power converter further comprises an isolating transformer connected in the AC link.

In an embodiment, the DC:DC power converter further comprises an impedance (e.g., an inductance) at an output of the (or each) active bridge circuit of the impedance synthesizer. Additional or alternatively, the DC:DC power converter further comprises an impedance at an output of the DC:AC converter circuit and/or the input of the AC:DC converter circuit.

In an embodiment, the (or each) active bridge circuit of the impedance synthesizer is a full-bridge circuit and comprises: a first half-bridge circuit comprising a pair of power semiconductor switches and a first intermediate node therebetween, the first intermediate node being connected to the AC side of the DC:AC converter circuit; and a second half-bridge circuit connected across the first half-bridge circuit, the second half-bridge circuit comprising a pair of power semiconductor switches and a second intermediate node therebetween, the second intermediate node connected to the AC side of the AC: DC converter circuit.

In an embodiment, the DC:AC converter circuit is a full-bridge circuit and comprises a third half-bridge circuit comprising a pair of power semiconductor switches and a third intermediate node therebetween, the third intermediate node being connected to the (or each) first intermediate node; the DC:AC converter circuit further comprises a fourth half-bridge circuit connected across the third half-bridge circuit, the fourth half-bridge circuit comprising a pair of power semiconductor switches and a fourth intermediate node therebetween; the AC:DC converter is a full-bridge circuit and comprises a fifth half-bridge circuit comprising a pair of power semiconductor switches and a fifth intermediate node therebetween, the fifth intermediate node being connected to the fourth intermediate node; and the AC:DC converter circuit further comprises a sixth half-bridge circuit connected across the fifth half-bridge circuit, the sixth half-bridge circuit comprising a pair of power semiconductor switches and a sixth intermediate node therebetween, the sixth intermediate node being connected to the (or each) second intermediate node.

In an embodiment, the power semiconductor switches are MOSFETs, for example SiC MOSFETs or GaN MOSFETs.

According to a second aspect, there is an electrical power system comprising:

a DC: DC power converter comprising a DC:AC converter circuit, an AC: DC converter circuit, an AC link that connects an AC side of the DC:AC converter circuit to an AC side of the AC:DC converter circuit and has an impedance synthesizer connected therein, the impedance synthesizer comprising an active bridge circuit; and
a control system configured to:

determine a desired impedance for the AC link; and
control a switching operation of a plurality of power semiconductor switches of the active bridge circuit and thereby control an output voltage of the impedance synthesizer and an impedance of the AC link according to the desired impedance.

The control system can take any suitable form. For example, the control system may be a single controller, or multiple distributed controllers. It may be implemented in hardware or using a combination of hardware and software. In an embodiment, the control system includes a switching controller that controls the switching operation of the plurality of power semiconductor switches (e.g., by interfacing with gate driver circuits of the active full-bridge circuit) and one or more additional controllers that are communicatively coupled (directly or indirectly) with the switching controller and that determine a desired impedance value for the switching controller to implement through control of the switching operation. The switching controller may form part of the DC:DC converter or be provided separately.

In an embodiment, the control system is further configured to: receive an indication of a current at input terminals of the impedance synthesizer; determine, based on the current and the desired impedance, an output voltage for emulating the desired impedance; and control the switching operation of the plurality of power semiconductor switches of the impedance synthesizer according to the output voltage.

In an embodiment, the indication of the current at the input terminals is a measurement of the current. In another embodiment, the indication of the current is an estimated or calculated current (e.g., a reference current value).

In an embodiment, the control system further configured to: determine a common-mode component and/or a differential-mode component of the current; and determine the output voltage based on both the desired impedance and one or more pre-defined transfer functions for filtering the common-mode component and/or differential-mode components.

In an embodiment, the electrical power system further comprises: a DC power source connected to a DC side of the DC:AC converter circuit; and a DC electrical network connected to a DC side of the AC:DC converter circuit.

In an embodiment, the control system is configured to monitor one or more operating parameters of the DC power source and/or the DC electrical network, and to determine the desired impedance value based on the one or more operating parameters.

In an embodiment, the DC power source is an energy storage system (ESS), which may comprise a battery.

In an embodiment, the DC electrical network is a first DC electrical network and the DC power source is a second DC electrical network.

According to a third aspect, there is an aircraft power and propulsion system comprising: the DC:DC power converter of the first aspect; or the electrical power system of the second aspect.

According to fourth aspect, there is an aircraft comprising: the DC:DC power converter of the first aspect; the electrical power system of the second aspect; or the power and propulsion system of the third aspect.

According to a fifth aspect, there is a method of operating an electrical power system. The electrical power system comprises:

> a DC power source;
> a DC electrical network;
> a DC:DC power converter comprising a DC:AC converter circuit connected, at a DC side, to the DC power source; an AC:DC converter circuit connected, at a DC side, to the DC electrical network; an AC link that connects an AC side of the DC:AC converter circuit to an AC side of the AC:DC converter circuit and has an impedance synthesizer connected therein, the impedance synthesizer comprising an active bridge circuit; and
> a control system,
> the method comprising:

>> determining, by the control system, a desired impedance for the AC link; and
>> controlling, by the control system, a switching operation of a plurality of power semiconductor switches of the active bridge circuit to control an output voltage of the impedance synthesizer and an impedance of the AC link according to the desired impedance.

In an embodiment, determining the desired impedance comprises determining an operating mode of the electrical power system and selecting one of a plurality of predetermined impedances according to the determined operating mode.

In an embodiment, the method further comprises monitoring, by the control system, one or more operating parameters of the DC electrical network. The desired impedance for the AC link is determined based on the one more operating parameters of the DC electrical network.

In an embodiment, the method further comprises determining, by the control system, based on the one or more operating parameters, whether there has been a change in an operating condition of the DC electrical network. Determining the desired impedance for the AC link comprises, in response to determining there has been a change in the operating condition of the DC electrical network, selecting a new impedance for the AC link.

In an embodiment, the change in the operating condition is a fault in the DC electrical network.

In an embodiment, selecting the new impedance for the AC link comprising selected an impedance with a higher resistive component.

In an embodiment, the method further comprises receiving, by the control system, an indication of a current at input terminals of the impedance synthesizer; and determining, by the control system based on the current and the desired impedance, an output voltage for emulating the desired impedance. The control system controls the switching operation of the plurality of power semiconductor switches of the active bridge circuit according to the output voltage determined by the control system.

In an embodiment, the method further comprises determining, by the control system, a common-mode component and/or a differential-mode component of the current. The control system determines the output voltage based on both the desired impedance and one or more pre-defined transfer functions for filtering the common-mode component and/or differential-mode components.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

FIG. 1A is a schematic illustration of a DAB DC:DC converter;
FIG. 1B is a schematic illustration of an isolated DAB DC:DC converter;
FIG. 2A is a schematic illustration of a DC:DC converter with an impedance synthesizer connected in the AC link;
FIG. 2B is a schematic illustration of an active bridge circuit and lumped output impedance;
FIG. 3 is an exemplary scheme for emulating an inductance using the impedance synthesizer;
FIG. 4 is a schematic illustration of a DC:DC converter in which the impedance synthesizer comprises a plurality of parallel-connected active bridge circuits;
FIG. 5 is a schematic illustration of an impedance synthesizer comprising a plurality of series-connected active bridge circuits;
FIG. 6A illustrates a model for simulating a DC:DC converter with an impedance synthesizer;
FIG. 6B illustrates the derivation of the output voltage of the impedance synthesizer;
FIG. 6C illustrates the internal structure of the impedance synthesizer used in the model of FIG. 6A;
FIG. 7A is a plot of the voltage output of the impedance synthesizer and a corresponding reference signal;
FIG. 7B is a zoomed in version of the plot of FIG.7A, showing the PWM structure of the voltage output;
FIG. 7C is a plot comparing the voltage reference signal, the fundamental component of the output voltage of the impedance synthesizer, and the AC current;FIG. 8A is a schematic illustration of an electrical power and propulsion system of an aircraft comprising a gas turbine engine;
FIG. 8B is a schematic illustration of an electrical power and propulsion system of an electric aircraft;
FIG. 8C is a schematic illustration of an electrical power and propulsion system of a hybrid-electric aircraft;
FIG. 9 is a schematic plan view of an aircraft; and
FIG. 10 is a flow chart illustrating a method of controlling an electrical power system.

## DETAILED DESCRIPTION

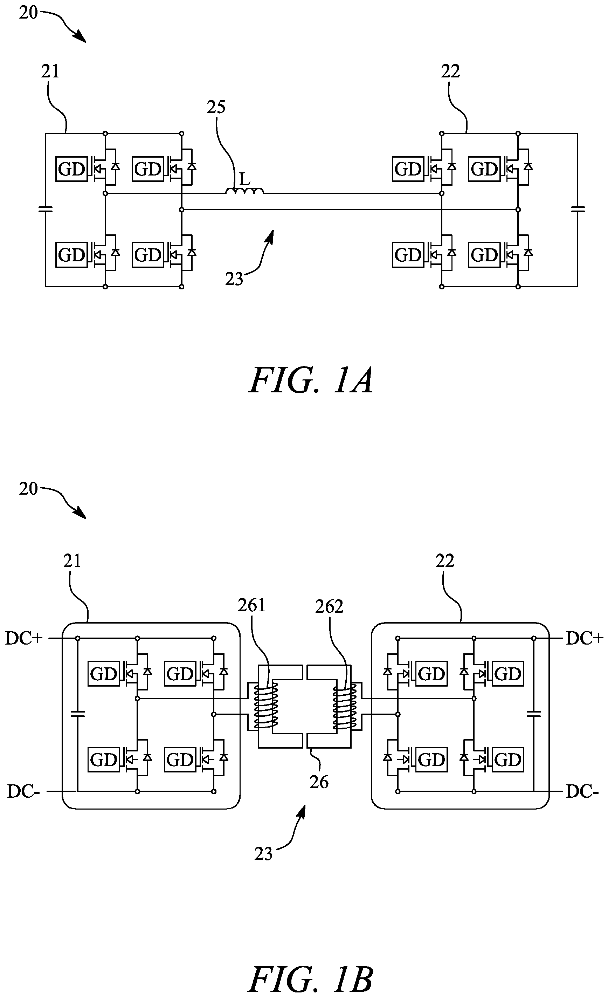

**FIGS. 1A-1B** illustrate DC:DC converters 20 of the dual active bridge (DAB) type. In each case, the DAB DC:DC converter 20 includes a DC:AC converter circuit 21, an AC:DC converter circuit 22 and an AC link 23. The AC link 23, which has an inductance L, connects respective AC sides of the DC:AC converter circuit 21 and AC:DC converter circuit 22 and provides a frequency-dependent voltage drop. In FIG. 1A, the inductance L is provided by an inductor 25 connected in the AC link 23, whereas in FIG. 1B the inductance L is provided by the leakage inductance of a transformer 26 connected in the AC link 23.

In the illustrated examples, the DC:AC converter circuit 21 and the AC:DC converter circuit 22 are bi-directional active full-bridge circuits comprising two half-bridge circuits and a smoothing DC capacitor connected in parallel. This is not intended to be limiting, as various different converter circuit topologies are known and may be suitable. Depending on the implementation, the DC:AC converter 21 and AC:DC converter 22 may be unidirectional or bidirectional and may be active or passive in its design. Examples include H-bridge circuits, two-level, three-phase circuits, and passive diode rectifiers, for example.

In the example, the inductor 25 is connected in a portion of the AC link connecting an intermediate node of one of the half-bridges of the DC:AC converter circuit 21 and an intermediate node of one of the half-bridges of the AC:DC converter circuit 22. The transformer 26 of FIG. 1B comprises a first winding 261 connected to first and second intermediate nodes of the first and second half-bridges of the DC:AC converter circuit 21 and a second winding 262 connected to first and second intermediate nodes of the first and second half-bridges of the AC:DC converter circuit 22.

DAB DC:DC converters may be suitable for, e.g., aerospace applications as they may provide bidirectional power control, excellent voltage regulation capabilities and a low footprint. The isolated topology of FIG. 1B may provide further benefits in terms of galvanic isolation, prevention of ground loops, and a reduction in capacitive and galvanic coupling, for example. However, the use of a passive inductive component, whether a passive inductor or a transformer, may have some drawbacks, including:

(i) The size of the inductor and its associated losses may be nontrivial, especially at high current ratings.

(ii) The inductor stores energy, and this needs to be dissipated or stored in other parts of the circuit during commutation or fault conditions.

(iii) The inductance value is fixed once commissioned. It is not possible to change the inductance in response to a change in the condition of the system.

(iv) The frequency response of the inductance may be undesirable, especially at higher frequencies, and may lead to issues such as a large capacitive coupling between windings.

(v) Additional components may be provided to vary the frequency response of the series impedance presented by the inductor, however this may make the solution more complex, heavy, and costly.

(vi) The inductor core can saturate if a significant DC current is applied, even for a short amount of time.

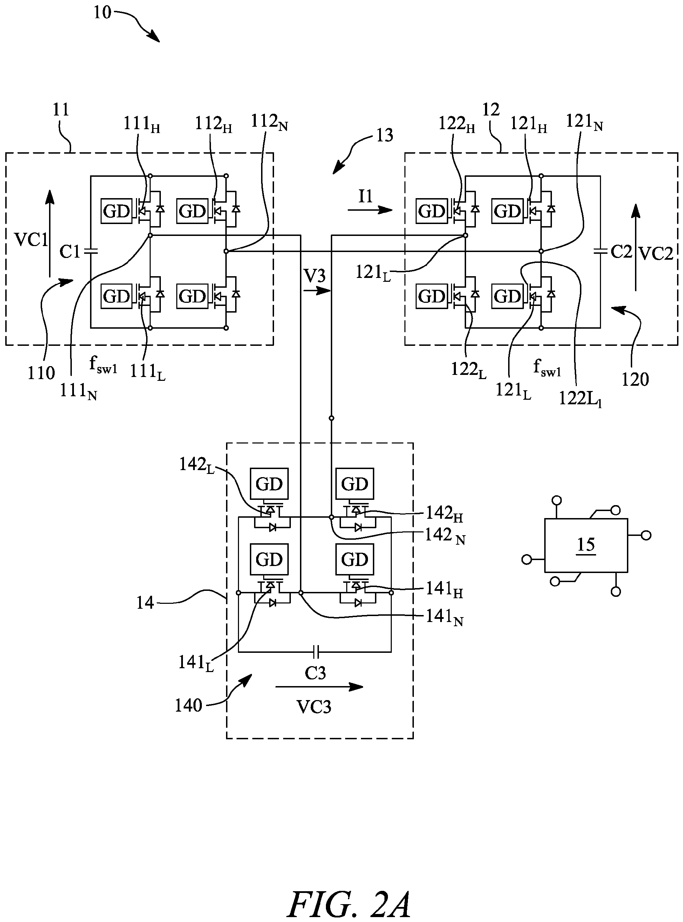

**FIG. 2A** illustrates an alternative DC:DC converter 10 in accordance with the present disclosure. The DC:DC converter 10 may address or alleviate one or more of the above-described problems or other problems.

Like the DAB DC:DC converters 20 of FIGS. 1A-1B, the DC:DC converter of FIG. 2A includes a DC:AC converter circuit 11, an AC:DC converter circuit 12 and an AC link 13 connecting respective AC sides of the DC:AC converter circuit 11 and the AC:DC converter circuit 12. However, instead of a passive inductance such as that provided by an inductor 25 or transformer 26, the DC:DC converter 10 of FIG. 2A includes an active circuit 14, referred to herein as an impedance synthesizer, connected in the AC link 13. Under the control of a switching controller 15, which interfaces with gate drivers ("GD") of power semiconductor switches of the impedance synthesizer 14, the impedance synthesizer is able to emulate a variety of different impedances, Z, including inductances of different values.

The impedance synthesizer 14 includes an active bridge circuit, which in the example of FIG. 2A is a full-bridge circuit 140. The full-bridge circuit 140 comprises two half-bridge circuits and a DC capacitor $C_3$ connected in parallel. Each half-bridge includes a high-side power semiconductor switch $141_H$, $142_H$ connected to a higher voltage DC rail and a low-side power semiconductor switch $141_L$, $142_L$ connected to a lower voltage DC rail. Each half-bridge further includes a respective intermediate AC node $141_N$, $142_N$, which provides a terminal and is where the respective low-side and high-side power semiconductor switches (e.g., $141_L$, $141_H$) of the half-bridge are connected in series. The intermediate node $141_N$ of a first of the half-bridge connects the impedance synthesizer to the DC:AC converter circuit 11, whilst the intermediate node $142_N$ of a second of the half-bridge connects the impedance synthesizer 14 to the AC:DC converter circuit 12. The power semiconductor switches $141_{L,H}$, $142_{L,H}$ may be MOSFETs, e.g., SiC or GaN MOSFETs, or another type of transistor. The diodes connected in anti-parallel with the power semiconductor switches $141_{L,H}$, $142_{L,H}$ may be discrete components or may instead represent the body diode character where the semiconductor switches are MOSFETs.

In the present example, the DC:AC converter circuit 11 and the AC:DC converter circuit 12 are also full-bridge converter circuits 110 and 120 of the same general configuration as the full-bridge circuit 140 of the impedance synthesizer 14. The intermediate node $141_N$ of the first half-bridge of the active bridge circuit 140 of the impedance synthesizer 14 is connected to an intermediate node $111_N$ of a first half-bridge of the DC:AC converter circuit 110. The intermediate node $142_N$ of the second half-bridge of the active bridge circuit 140 of the impedance synthesizer 14 is connected to an intermediate note $122_N$ of a second half-bridge of the AC:DC converter circuit 120. An intermediate node $112_N$ of a second half-bridge of the DC:AC converter circuit 110 is connected to an intermediate node $121_N$ of a first half-bridge of the AC:DC converter circuit 120.

Other active bridge circuits may be used for the impedance synthesizer 14, the DC:AC converter circuit 11 and the AC:DC converter circuit 12 and various possibilities will occur to those skilled in the art. Examples include H-bridge circuits, two-level multi-phase (e.g., 3-phase) full-bridge circuits and single half-bridge circuits. It may be beneficial to use the same circuit topology for each of the impedance synthesizer 14, the DC:AC converter circuit 11 and the AC:DC converter circuit 12, as the use of standard power semiconductor blocks may improve ease of manufacture, for example. Whilst the same circuit topologies may be used, the component parameters may be different. For example, the current ratings of the power semiconductors $141_{L,H}$, $142_{L,H}$ of the impedance synthesizer 14 may be different to the current ratings of the power semiconductors $111_{L,H}$, $112_{L,H}$, $121L,H$, $122_{L,H}$ of the DC:AC and AC:DC converter circuits 11, 12.

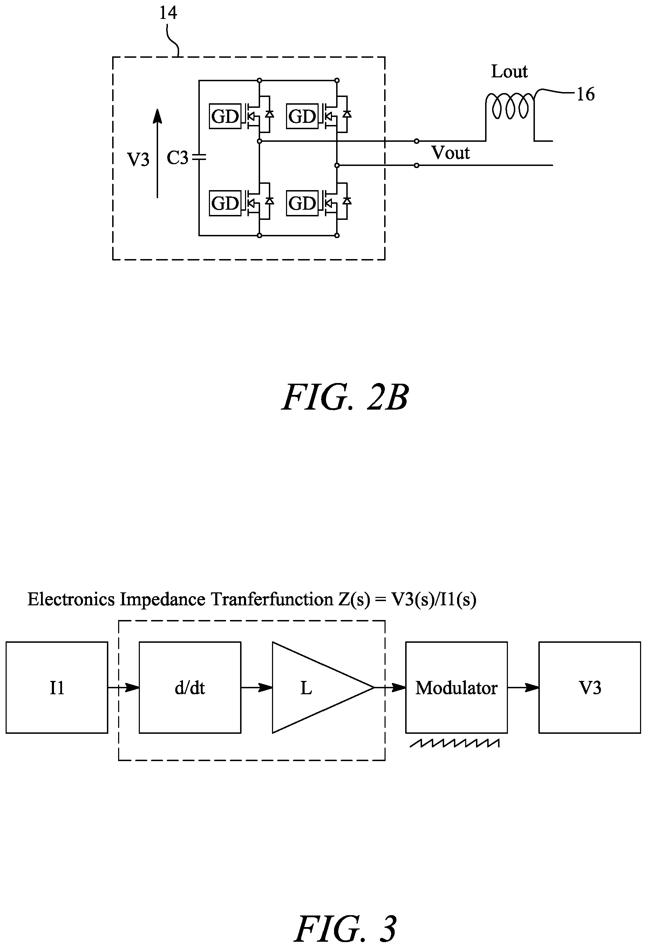

It is noted that, at each switching instant, a current loop may exist momentarily between the three capacitors (C1, C2, C3) of the DC:DC converter 10. At the switching instant, the capacitors may connect in series, and this may yield a high transient current around the loop, especially given that the MOSFET on-state resistance ($R_{ds\_on}$) and the capacitor equivalent series resistance (ESR) are low. To mitigate, the DC:DC converter 10 may include a lumped inductance (e.g., via limb reactors) to reduce the transient current. These devices provide stray inductance to control the transient circulating current. An example of this approach is illustrated in FIG. 2B for the impedance synthesizer 14: a lumped inductance 16 is fitted at its output. While only illustrated for the impedance synthesizer 14, a lumped impedance 16 may be fitted at the output of the DC:AC converter circuit 11 and/or the input of the AC:DC converter circuit 12.

In principle, the impedance synthesizer 14 can emulate any impedance, Z, which can be expressed as:

$$Z(s) = Re[Z(s)] + jIm[Z(s)] \quad (1)$$

$$s = j \times \omega \qquad (2)$$

where Re[Z(s)] is the real part of the impedance, Im[Z(s)] is the imaginary part of the impedance, and $\omega$ is the electrical frequency. Generally, each of Re[Z(s)] and $Im[Z(s)]$ may be frequency-dependent or frequency-independent functions of electrical resistance (R), inductance (L) and capacitance (C). Referring again to FIG. 2A, to synthesize a desired impedance we can consider, without loss of generality, the voltage V3 across the output terminals of the impedance synthesizer 14 and the current I1 flowing across the AC link 13. The impedance of the AC link 13 is given by the quotient of the voltage and current in the Laplace domain:

$$Z(s) = \frac{V3(s)}{I1(s)} \qquad (3)$$

The voltage V3 across the output terminals of the impedance synthesizer 14 may be controlled by applying, through the switching controller 15, a suitable pulse width modulation strategy to the power semiconductor switches $141_{L,H}$, $142_{L,H}$ of the active bridge circuit 140. Therefore, starting from a desired impedance, Z, and the current I1, an output voltage V3 that will synthesize the desired impedance can be determined. A modulation strategy for producing the output voltage V3 can then be determined and applied, as will be understood by those skilled in the art.

A first approach for determining the output voltage (V3) is to resolve a time-domain difference equation. This means translating the entire Laplace or Z-transform transfer function of the impedance into a discrete-time difference equation. The output of this computation is the total time-domain voltage that corresponds to the total impedance, with each of its frequency components represented by the summation of the time-domain output voltage. An example of this approach is illustrated in FIG. 3 for a purely inductive impedance of magnitude L. The process starts by determining the current, I1. This may be measured using a suitably located sensor, or a reference current may be obtained or calculated. The current I1 is then differentiated with respect to time (e.g., with sampling instant "k"), and the result multiplied by the desired inductance value L. The result, $L\frac{dI1}{dt}$, is the output voltage V3, and at each time instant "k" contains all the frequency-related contents of the impedance.

A second approach for determining the required output voltage (V3) is to resolve each frequency component of the impedance independently in the Laplace or Z-transform domain, and to then sum each of these components in the time domain. This approach leverages the superposition principle in linear systems. In this approach, the output voltage corresponding to each impedance value at a given frequency component is computed in the Laplace or Z-transform domain. Then, each component is reverted back or anti-transformed to the time domain, to then sum all the time-domain voltages arising from each frequency, therefore providing the total output voltage. The resulting output voltage is the same as that determined using the first approach.

So that the impedance synthesizer 14 presents itself as a time-continuous component to the rest of the DC:DC converter, the switching controller 15 may switch the power semiconductor switches $141_{L,H}$, $142_{L,H}$ at a frequency ($f_{sw3}$) that is higher than the switching frequency ($f_{sw1}$) of the power semiconductor switches $111_{L,H}$, $112_{L,H}$, $121_{L,H}$, $122_{L,H}$ of the DC:AC converter circuit 11 and the AC:DC converter circuit 12.

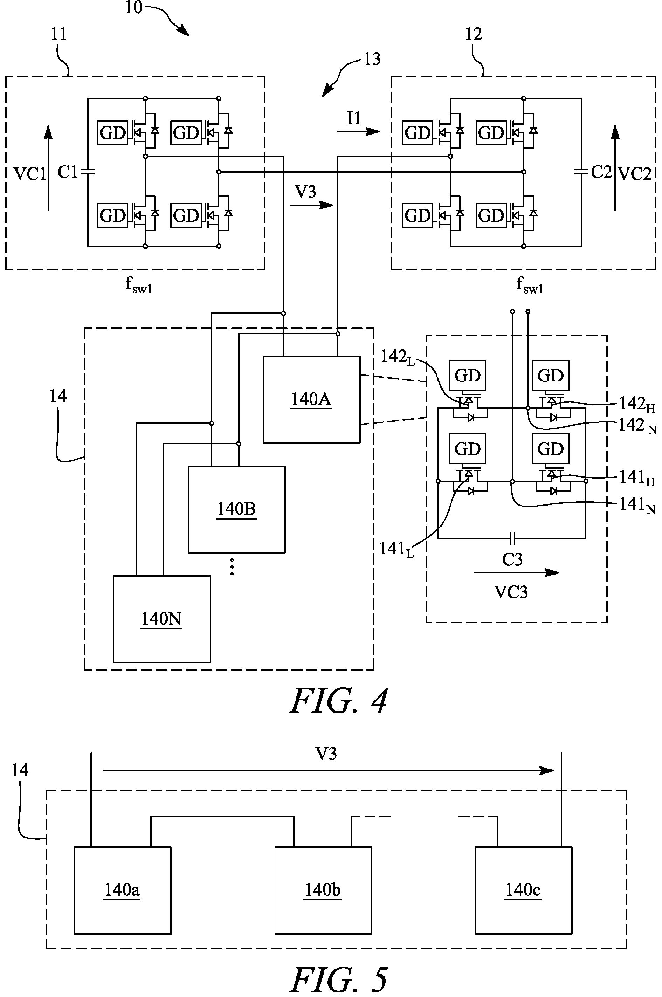

FIG. 4 illustrates a variant in which the impedance synthesizer 14 of the DC:DC converter 10 includes a plurality (an integer number N) of active bridge circuits 140A, 140B, ..., 140N connected in parallel across common input terminals. Once again, full-bridge circuits are illustrated but other active bridge circuits may be used instead.

Utilizing a plurality of parallel active bridge circuits, the current across each active bridge circuit is reduced by a factor of N (i.e., the current it is I1/N). The total conduction losses are reduced by a factor of N, as each of the N parallel-connected electronic impedances dissipate $1/N^2$ of the conduction power losses that would be dissipated by one equivalent electronic impedance. Further, due to the linear dependency of the switching losses with switching frequency, input voltage (drain-to-source voltage for a MOSFET) and conducted current, reducing the conducted current by a factor of N in each of the parallel branches allows for an increase of the switching frequency by the same factor (N), assuming constant switching losses per active bridge circuit 140.

As noted above, switching the power semiconductor switches $141_{L,H}$, $142_{L,H}$ of the impedance synthesizer 14 faster than the power semiconductor switches of the DC:AC and AC:DC converter circuits 11, 12 improves the time-continuity of the presented impedance waveform. Thus, by utilizing a plurality of parallel-connected active bridge circuits, 140a, 140b, ..., 140N, the time-continuity of the impedance may be improved further, and/or a larger range of impedances may be emulated without unacceptable degradation of the impedance waveform. Further, in some instances the magnitude of the current, I1, may be a limiting factor in determining whether the impedance synthesizer 14 can emulate a given impedance due to, e.g., the current ratings of the power semiconductor switches $141_{L,H}$, $142_{L,H}$. Increasing the number of parallel-connected active bridge circuits, and thus reducing the current across each active bridge circuit, may relax this limitation.

The switching operation of each of the plurality of parallel-connected active bridge circuits may be synchronized in time (i.e., if power semiconductor switch $141_L$ of bridge circuit 140A is switched on, the semiconductor switch $141_L$ of all other bridge circuits 140B, ..., 140N are switched on at the same time). In other examples, however, the switching operation of the parallel-connected active bridge circuits 140A-N may be time-interleaved.

In a first example of time-interleaved switching, the switching operation of each individual one of the active bridge circuits 140A, 140B, ..., 140N is temporally offset from the others so that each active bridge circuit has a unique switching period within each fundamental frequency cycle. Time interleaving the switching of N active bridge circuits 140A, 140B, ..., 140N in this way emulates the fast switching of a single active bridge circuit. In other words, each one of the N active bridge circuits 140A, 140B, ..., 140N need not be switched any faster but, from the perspective of the external circuit, the impedance synthesizer 14 appears to be switching N times faster due to the staggered switching of the N active bridge circuits. Each active bridge circuit handles the full current I1 but for only a fraction, 1/N, of each fundamental cycle.

In a second example of time-interleaved switching, the N active bridge circuits 140A, 140B, ..., 140N are divided into P groups of Q active bridge circuits (i.e., P x Q = N). For a given one of the P groups, the switching operation of the Q active bridge circuits is synchronized. However, the switching operation of each of the P groups are time-interleaved so that each group of Q active bridge circuits has a unique switching period within each fundamental frequency cycle. From the perspective of the external circuit, the switching rate appears higher by a factor of P due to the staggered switching of the P groups. Using this approach, each active bridge circuit conducts only a fraction, 1/Q, of the total current I1. Reducing the current by a factor of Q allows the switching rate of the power semiconductor switches to be increase by a factor of Q. Thus, the overall increase in switching rate may be as a high as a factor of P x Q = N, as in the previous examples. However, compared with the first example of inter-leaved switching, the current that must be conducted by each active bridge circuit is lower (I1/Q rather than I1). Compared with the non-interleaved example, the rate at which the power semiconductor switches must be switched $141_{L,H}$, $142_{L,H}$ to achieve the factor of N increase is reduced by factor of Q. Thus, the second example may provide a balance between the requirements of the non-interleaved approach (reduced current but requiring a high semiconductor switching rate) and the first example of interleaved switching (no increase in semiconductor switching rate but high current per active bridge circuit).

FIG. 5 illustrates another variant in which the impedance synthesizer 14 of the DC:DC converter 10 includes a plurality (an integer number n) of active cells 140a, 140b, ..., 140n connected in series between input terminals. Each cell (e.g., cell 140a) may consist of a single active bridge circuit 140 or may comprise a plurality of active bridge circuits 140A, 140B, ..., 140N connected in parallel. Utilizing series-connected cells 140a-n increases the maximum inductance that the impedance synthesizer 14 can emulate. An optimal configuration for the desired application, in terms of maximum impedance to be emulated and required waveform quality, may be a combination of series- and parallel- connection of active bridge circuits.

As noted previously, in principle, any type of impedance may be synthesized by the impedance synthesizer 14, provided there is sufficient control bandwidth to produce a reasonably undistorted waveform at the output terminals (e.g., $411_N$, $412_N$) of the impedance synthesizer. A non-exhaustive list of AC link impedances that may be emulated includes:

(i) An inductor (as described above);
(ii) A capacitor;
(iii) A series inductor-capacitor set (e.g., emulating a resonant LLC converter);
(iv) A resistor (e.g., for active damping purposes).

Further, as the impedance that is synthesized is defined programmatically, the impedance emulated by the impedance synthesizer 14 may be changed during operation in response to a change in operating condition. Some examples will now be provided.

Disturbance Suppression

The impedance synthesizer 14 may be controlled to temporarily emulate an impedance that is either purely resistive or has a resistive component, to absorb net energy as a DC chopper or a dynamic braking system (DBS) would do. This may be a particularly useful feature when a transient disturbance requires an excess of energy to be absorbed and then dissipated at a later time.

Leakage Inductance Compensation

In some examples, in addition to the impedance synthesizer 14, it may be desirable to include a transformer (e.g.,

a transformer 26 as shown in FIG. 1B) in the AC link 13, for example to provide galvanic isolation. In this case, the impedance synthesizer 14 may be controlled to synthesize an inductance that compensates for either a lack or an excess of leakage inductance. This may bring a particular benefit if using a planar transformer, which may otherwise be problematic due to difficulties in controlling its leakage inductance.

EMC Filtering

The impedance synthesizer 14 may be used to provide common-mode (CM) and/or differential-mode (DM) EMC filtering capabilities. This is done by measuring (or calculating) the currents at the input terminals of the impedance synthesizer 14, determining the CM and DM components of the current, and electronically applying a pre-defined transfer function for each CM and/or DM. The use of the impedance synthesizer for EMC filtering may reduce the need for bulky passive components to filter the CM and DM components.

Fault Blocking

The DC:DC converter 10 has inherent DC and AC fault blocking capability. For a DC-side fault, the DC:DC converter 10 can oppose the AC voltage induced after the inversion bridge, i.e., at the AC side of the DC:AC converter circuit 11. A converter 10 composed of full-bridge cells, as in the examples described herein, is capable of opposing both positive and negative voltages. For an AC-side fault, the switching controller 15 can simply block all semiconductor switches of the DC:DC converter 10 (i.e., not fire any MOSFETs), thus stopping any current conduction thanks to the current block capability of the body diodes in the MOSFETs, which become reverse-biased.

The impedance synthesizer 14 provides additional fault protection possibilities, and in particular may provide protection against volatility and unknowns. An impedance tailored to the needs created by a fault may be synthesized as and when required. Overall, the converter 10 may be more robust to requirements changes as compared to a design reliant on fixed passive devices.

The DC:DC converter 10 could also assist with fault ride-through capability. For example, if the converter 10 must operate and withstand for the duration of a fault, the series impedance provided by the impedance synthesizer 14 could be increased, and subsequently reduced once the fault has cleared.

Simulation and Validation

Operation of the DC:DC converter 10 described above was simulated to validate the impedance synthesizer concept. In particular, a Simulink (Registered Trademark) model was developed to simulate emulation of an inductance, L, as per the example in FIG.3.

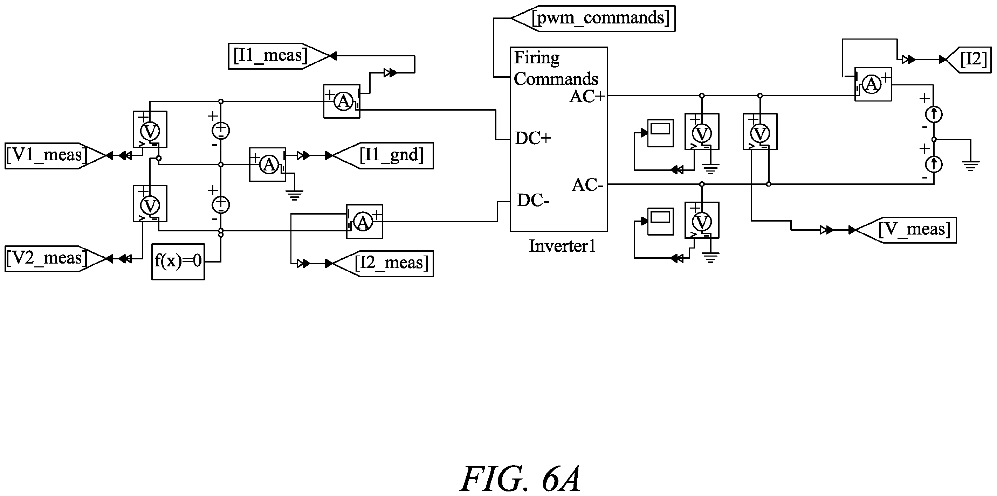

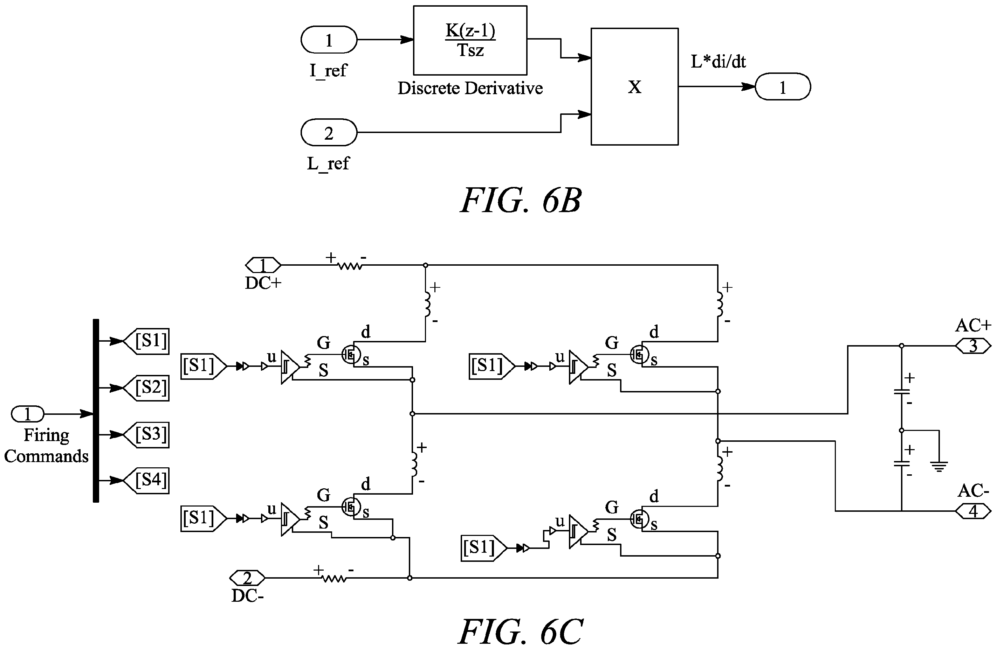

The Simulink model developed to validate the concept is shown in **FIG. 6A.** The model incorporates an active bridge circuit which interfaces between a DC voltage at the input and a constant AC current source at the output. For the active bridge circuit to synthesise an impedance, in this case a target inductance L_ref, at its terminals, the AC current, I_ref, is processed as shown in **FIG. 6B.** The voltage reference for the active bridge circuit is derived through the product of L_ref and the discrete derivative of I_ref. The voltage reference is normalised and then input to a 2-level PWM generator to derive the required active bridge circuit gate driver signals. **FIG. 6C** illustrates the internals of the active bridge circuit, showing it to be a full bridge circuit.

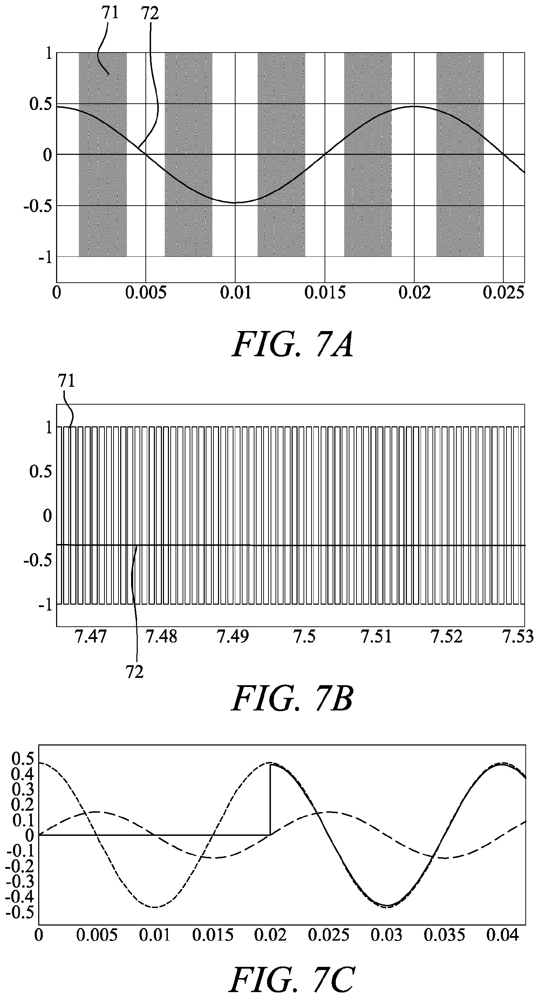

The Simulink model was run with the parameters listed in Table 1, yielding the pulse width modulated square wave voltage output 71 illustrated in **FIGS. 7A-7B.** FIGS. 7A-7B also illustrate the sinusoidal voltage reference signal 72. FIG. 7A illustrates the waveforms 71, 72 from a time t = 0 to about t = 0.025 seconds, and at this scale the PWM structure of the output signal can barely be resolved and appears as shading. FIG. 7B is zoomed in and shows the waveforms 71, 72 from about t = 0.00746 seconds to t = 0.00753 seconds, and at this scale the PWM structure of the output signal 71 can be resolved but there is no visible change in the reference voltage signal 72.

*Table 1: List of parameters used to configure the Simulink model.*

| Symbol | Parameter | Value | Units |
|---|---|---|---|
| $T_{s\_plant}$ | Plant sampling time | 0.5 | μs |
| $V_{DC}$ | DC voltage | 1 | V |
| $f_{AC}$ | AC current source frequency | 50 | Hz |
| $|I\_ref|$ | AC current source magnitude | 0.15 | A |
| $L\_ref$ | Target inductance | 0.01 | H |

To confirm that the impedance synthesizer 14 was correctly synthesising L_ref, a Fast Fourier Transform (FFT) of its voltage output was conducted to extract the fundamental component. A comparison between the fundamental frequency, the voltage reference and the AC current was then made as shown in FIG. 7C. Shown are the voltage reference signal (amplitude 0.47 V), the fundamental component of the impedance synthesizer voltage output (amplitude 0.45 V) and the AC current (amplitude 0.15 A). The FFT is computed after one cycle of the fundamental frequency. FIG. 7B confirms agreement between the impedance synthesizer output and the target voltage reference signal and the phase relationship between voltage and current. This supports the concept outlined in FIG. 3. Discrepancies between the voltage waveforms can be justified through errors due to PWM implementation, discretisation, and open-loop model behaviour. Furthermore, parasitic resistances, capacitances and inductances within the synthesizer, in addition to model discretisation error, mean that the voltage across the synthesizer terminals may not lead the current by exactly 90°.

Example Applications

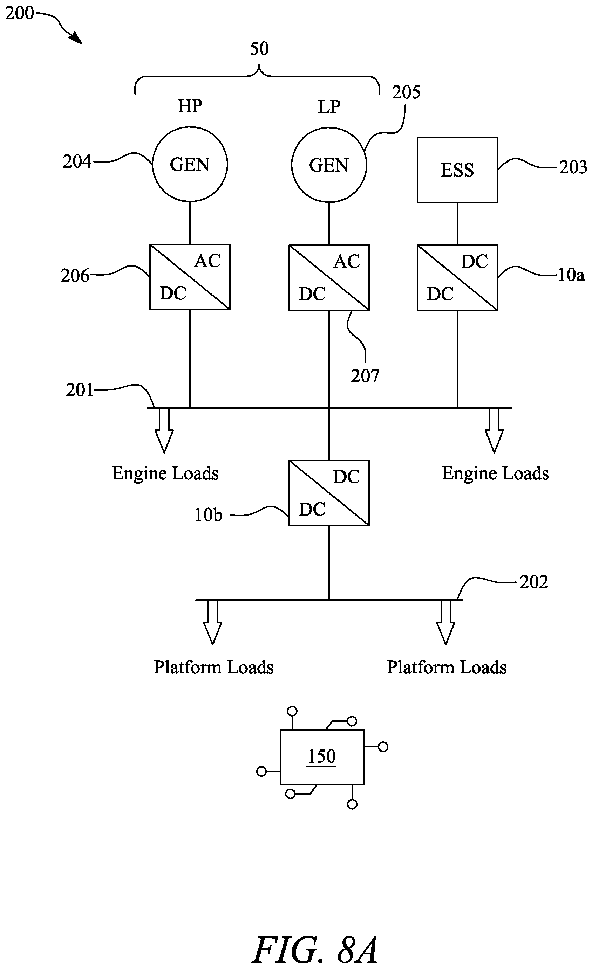

The DC:DC power converter 10 of the present disclosure may be used in any electrical power system in which there is a DC: DC power converter. Exemplary electrical power systems for aircraft are shown in FIGS. 8A-8C.

FIG. 8A illustrates an electrical power system 200 of an aircraft. The electrical power system 200 includes two DC networks: a first, higher voltage (e.g., 540 $V_{dc}$), DC network 201 that supplies power to electrical loads associated with a gas turbine engine 50 and a second, lower voltage (e.g., 270 $V_{dc}$), DC network 202 that supplies platform electrical loads. The first DC network 201 is supplied with power, via rectifiers 206, 207, from first and second electrical generators 204, 205 that are coupled to the high-pressure (HP) and low-pressure (LP) spools of the gas turbine engine 50. The first DC network 201 is also supplied with power by an energy storage system, ESS, 203, and a first DC:DC power converter 10a is connected between the terminals of the ESS 203 and the first DC network 201 to account for variation in the terminal voltage of the ESS 203 as it charges and discharges. A second DC:DC power converter 10b is connected between the first and second DC networks 201, 202 for power exchange therebetween. Depending on the configuration of the DC:DC converters 10a, 10b, power flow may be unidirectional or bi-directional. The system further includes a control system 150. Either or both of the two DC:DC converters 10a, 10b may be of the type described above. The control system 150 may determine a desired AC link impedance for each respective DC:DC converter 10a, 10b and control their respective impedance synthesizer to implement the desired impedance.

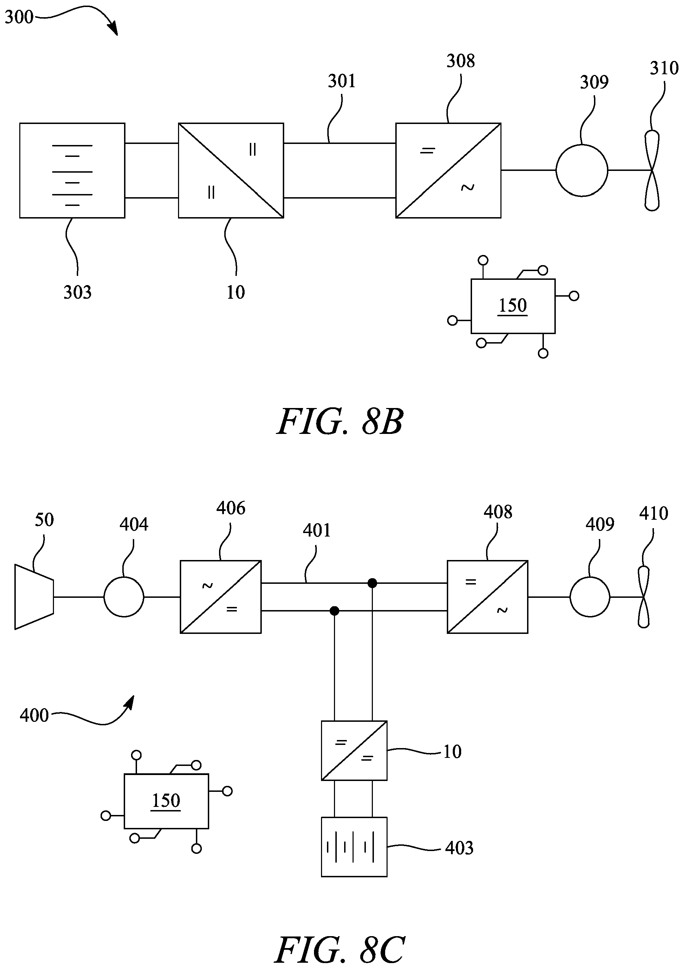

FIG. 8B shows, in schematic form, a purely electrical power and propulsion system 300 of an aircraft. The system 300 includes a propulsor 310 (e.g., a propeller or fan), whose rotation is driven by an electrical machine 309. The electrical machine 309 receives electrical power from a DC network 301 via a DC:AC power converter 308. The DC network 301 is supplied with power by an energy storage system 303. A DC:DC converter 10, which may be of the type described above, provides an interface between the energy storage system 303 and the DC network 303. Control of the system, including of the impedance synthesizer 14 of the DC: DC converter 10, is performed by the control system 150.

FIG. 8C shows, again in schematic form, a hybrid electrical power and propulsion system 400 of an aircraft. The system 400 includes a propulsor 410 whose rotation is driven by an electrical machine 409. The electrical machine 409 receives electrical power from a DC network 401 via a DC:AC power converter 408. The DC network 401 is supplied with power by two sources: an energy storage system 403 and a generator set including a gas turbine engine 50, an electrical generator 404 coupled to a shaft of the gas turbine engine 50 and a rectifier 406. A DC:DC converter 10, which may be of the type described above, provides an interface between the energy storage system 403 and the DC network 401. The DC:DC converter 10 may be bi-directional to facilitate charging of the energy storage system 403 using power from the generator set, in addition to discharge of the battery to the DC network 401. Control of the system, including of the impedance synthesizer 14 of the DC:DC converter 10, is performed by the control system 150. Those skilled in the art will recognise the propulsion system 400 of FIG. 8C to be of the series hybrid type. Other hybrid electric propulsion systems are of the parallel type, while still others are of the turboelectric type or have features of more than one type.

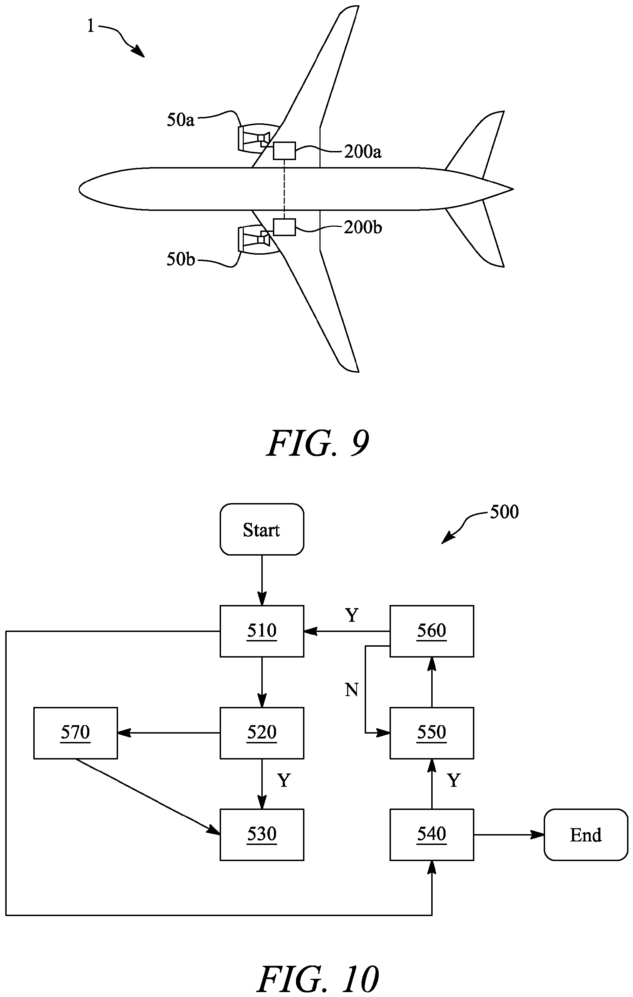

FIG. 9 shows an aircraft 1 that includes first and second gas turbine engines 50a, 50b. The engines 50a, 50b are associated with electrical power systems 200a, 200b, which may of the type shown in FIG. 8A or a variant thereof. As illustrated by the dotted lines, the electrical power systems 200a, 200a may be connected. For example, each electrical power system 200a, 200b may have a platform DC electrical network 202 and these may be connected or connectable via bus ties. The gas turbine engines 50a, 50b may be of any suitable configuration, for example they may be two-spool, three-spool or geared turbofans having one, two or more shaft-coupled electrical machines 204, 205.

Method of Operation

FIG. 10 is a flow chart illustrating a method 500 of operating an electrical power system that comprises a DC:DC converter 10 of the type described herein. The electrical power system may be an aircraft electrical power system, for example one of the types shown in FIGS. 8A-8C. Alternatively, it may be an electrical power system for another transport application (e.g., a vehicle, ship, or train) or of a non-transport application. The DC:DC converter 10 is connected, at one side, to a DC power source, which may be an energy storage system (e.g., ESS 203) or a DC electrical network (e.g., DC network 201). At another DC side of the DC:DC converter 10 is connected to a DC electrical network (e.g., DC network 201 or 202). The method 500 takes place under the control of a control system 150, which may take any desired form suitable for the application, e.g., a distributed control system or a single controller.

At the start of the method 500, the electrical power system may be starting up, or may already have started and is operating in a normal condition (i.e., functioning as intended with no faults).

At 510, the control system 150 determines a desired value for the impedance of the AC link 13 of the DC:DC converter. The desired impedance, the form of which is generally described by Equation (1), may have any suitable value and have any one or more of resistive, inductive and/or capacitive component.

In an example, the control system 150 has freedom to determine any impedance value based on or more monitored parameters of the electrical system, as described in more detail with reference to optional steps 550, 560 and 570. In another example, the control system 150 may select an impedance from amongst a plurality of different pre-defined impedances. For instance, the electrical power system may have a plurality of anticipated operating modes, and the control system 150 may determine the operating mode and select the impedance according to the operating mode.

At 520, the control system 150 receives an indication of a current at the input terminals of the impedance synthesizer 14. In some examples, the electrical power system includes one or more suitably located sensors for measuring, directly or indirectly, the current across the input terminals of the impedance synthesizer 14 and in this case the control system 150 may receive the measurement. In other examples, the control system 150 calculates, or receives the result of a calculation of, a reference current representing an expected or target current across the input terminals.

At 530, the control system determines, based on the current received in step 520 and the desired impedance determined at step 510, an output voltage of the impedance synthesizer 14 that is suitable for emulating the desired impedance. As explained previously, the apparent impedance of the AC link 13 will be the quotient of the output voltage (V3) and current (I1) in the Laplace domain. Therefore, based on the known desired impedance and the current from step 520, the control system 150 can determine an output voltage for emulating the impedance. The control system 150 may utilize one of the techniques described above, i.e., the time-domain difference equation resolution approach or the Laplace domain frequency resolution approach, or another technique to determine the output voltage.

At 540, the control system controls the switching operation of the power semiconductor switches $141_{L,H}$, $142_{L,H}$ of the impedance synthesizer according to the output voltage determined at 530 so that the impedance synthesizer 14 emulates the desired impedance. The control system 150, which may include a switching controller (e.g., switching controller 15) that interfaces with the gate drivers of the power semiconductor switches $141_{L,H}$, $142_{L,H}$, implements a pulse width modulation switching strategy so that the power semiconductor switches $141_{L,H}$, $142_{L,H}$ together produce the output voltage determined at step 530.

A suitable pulse width modulation strategy will depend not just on the desired output voltage, but, for example, the circuit topology of the active bridge circuit 140 and whether or not there are a plurality of parallel- and/or series-connected active bridge circuits as described above with reference to FIG. 4 and FIG. 5. Those skilled in the art of power electronics control will understand how a suitable PWM strategy may be determined and implemented from the output voltage.

It should be understood that steps 520 and 530 may be skipped such that the method proceeds directly from step 510 to step 540. For example, the control system 150 may have stored in accessible memory a relationship, such as a look-up table or the like, that relates impedances to output voltages. Such an approach may be particularly suitable where the electrical power system has a number of pre-defined operating modes and associated desired AC link impedances. In this case, relatively complex computation of the output voltage may be avoided. In some examples, the control system 150 may have the ability to both skip steps 520 and 530, e.g., using a look-up table, and to perform steps 520 and 530, e.g., to refine a desired impedance or in case an unexpected operating condition arises for which no output voltage is pre-stored.

Having synthesized the desired impedance at 540, the method 500 may end. Alternatively, one or more of the optional steps 550-570 may be implemented.

At 550, the control system 150 monitors one or more operating parameters of the DC electrical network. For example, the control system may measure one or more voltage or current values in the DC network for the purposes of health monitoring and diagnostics, or to monitor an electrical power demand associated with one or more loads powered by the DC network.

At 560, the control system 150 determines, based on the one or more operating parameters, whether there has been a change in the operating condition of the electrical power system. For example, a sudden collapse in the DC network voltage may indicate a fault in the DC network. As another example, an increase or decrease in the network current may indicate a change in the loading of the network. If no change is detected, the method may proceed back to step 550 where the control system 150 continues to monitor operating parameters. If a change is detected, the method proceeds back to step 510 where a new impedance is determined. The method would then proceed to step 540, possibly via steps 520 and 530.

In some cases, the new impedance selected at step 510 has a higher resistive component. I.e., the resistive component may be increased from zero or non-zero to a higher non-zero value. This may provide damping to in the case of a system disturbance or fault.

Where step 520 is performed (i.e., the control system 150 receives an indication, e.g., a measurement, of the current at the input terminals of the impedance synthesizer 14), optional step 570 may also be performed. Here, the control system determines a common-mode component and/or a differential-mode component of the current. This determination is then provided as an input to step 530, where the output voltage for the impedance synthesizer 14 is determined. The control system 150 utilizes the knowledge of the common-mode component and/or a differential-mode component of the current to filter them, by applying one or more suitable pre-defined filtering transfer functions.

Techniques described herein may provide one or more of the following advantages:

(a) By using an impedance synthesizer, the DC power converter is more configurable than if passive elements are used. This may be achieved using standard blocks than can be manufactured as a single technology component.

(b) System-level features such as extended soft-switching operation ranges can be achieved by presenting an electronic impedance with resonances at the fundamental waveform of the main current I1.

(c) Active damping can be provided to suppress undesired disturbances, including common-mode and differential-mode components, at specific frequencies, without requiring bulky and lossy passive elements. This may increase the resilience and stability of the converter.

(d) The controllable introduction of electronic inductance can be of great advantage when a planar transformer is used. These may not normally be a viable option due to the difficulty in controlling their leakage inductance.

(e) The described approach may not need to eliminate its stored energy during commutation or fault conditions. This may lead to a more compact and lightweight system design when compared to the use of, e.g., passive inductors.

(f) The described converter may be able block and ride through both AC and DC faults at either end of the converter.

(g) A net reduction in mass and an improvement in power density due to the removal of passive components.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

It will also be appreciated that whilst the invention has been described with reference to aircraft and aircraft power and propulsion systems, the techniques described herein could be used for many other applications. These include, but are not limited to, automotive, marine and land-based applications.

**Claims**

1. A DC:DC power converter (10), comprising:

   a DC:AC converter circuit (11);
   an AC:DC converter circuit (12);
   an AC link (13) that connects an AC side of the DC:AC converter circuit to an AC side of the AC:DC converter circuit and has an impedance synthesizer (14) connected therein, the impedance synthesizer comprising an active bridge circuit (140); and
   a switching controller (15) configured to control a switching operation of a plurality of power semiconductor switches ($141_{L,H}$, $142_{L,H}$) of the active bridge circuit and thereby control an output voltage ($V_3$) of the impedance synthesizer and an impedance of the AC link.

2. The DC:DC converter (10) of claim 1, wherein the active bridge circuit (140) of the impedance synthesizer (14) is a full-bridge circuit.

3. The DC:DC power converter (10) of claim 1 or claim 2, wherein each of the DC:AC converter circuit (11) and the AC:DC converter circuit (12) comprise an active bridge circuit (110, 120), each active bridge circuit comprising a plurality of power semiconductor switches ($111_{L,H}$, $112_{L,H}$; $121_{L,H}$, $122_{L,H}$).

4. The DC:DC power converter (10) of any one of the preceding claims, wherein:

each of the DC:AC converter circuit (11) and the AC:DC converter circuit (12) comprises a plurality of semiconductor switches ($111_{L,H}$, $112_{L,H}$; $121_{L,H}$, $122_{L,H}$);
the switching controller is configured to switch the plurality of power semiconductor switches ($141_{L,H}$, $142_{L,H}$) of the impedance synthesizer (14) at a frequency that is higher than a frequency at which the plurality of power semiconductor switches of the DC:AC converter circuit and the AC:DC converter circuit are switched.

5. The DC:DC power converter (10) of any one of the preceding claims, wherein:

the impedance synthesizer (14) comprises a plurality of parallel-connected active bridge circuits (140A-N), each of the plurality of active bridge circuits comprising a plurality of power semiconductor switches ($141_{L,H}$, $142_{L,H}$); and
the switching controller (15) is configured to control a switching operation of the plurality of power semiconductor switches of each of the plurality of active bridge circuits and thereby control the output voltage of the impedance synthesizer and the impedance of the AC link (13).

6. The DC:DC power converter (10) of any one of the preceding claims, wherein:

the impedance synthesizer (14) comprises a plurality of series-connected active bridge circuits (140a-n), each of the plurality of active bridge circuits comprising a plurality of power semiconductor switches ($141_{L,H}$, $142_{L,H}$); and
the switching controller (15) is configured to control a switching operation of the plurality of power semiconductor switches of each of the plurality of active bridge circuits and thereby control the output voltage of the impedance synthesizer and the impedance of the AC link (13).

7. The DC:DC power converter (10) of any one of the preceding claims, wherein:

the impedance synthesizer (14) comprises a plurality of series-connected cells (140a-n), each cell of the plurality of series-connecting cells comprising a plurality of parallel-connected active bridge circuits (140A-N), each of the plurality active bridge circuits comprising a plurality of power semiconductor switches ($141_{L,H}$, $142_{L,H}$); and
the switching controller (15) is configured to control a switching operation of the plurality of power semiconductor switches of each of the plurality of active bridge circuits and thereby control the output voltage of the impedance synthesizer and the impedance of the AC link (13).

8. The DC:DC power converter (10) of any one of the preceding claims, further comprising an isolating transformer (135) connected in the AC link (13).

9. An electrical power system (200, 300, 400) comprising:

a DC:DC power converter (10, 10a, 10b) comprising a DC:AC converter circuit (11), an AC:DC converter circuit (12), and an AC link (13) that connects an AC side of the DC:AC converter circuit to an AC side of the AC:DC converter circuit and has an impedance synthesizer (14) connected therein, the impedance synthesizer comprising an active bridge circuit (140); and
a control system (150) configured to:

determine a desired impedance for the AC link; and
control a switching operation of a plurality of power semiconductor switches ($141_{L,H}$, $142_{L,H}$) of the active bridge circuit and thereby control an output voltage of the impedance synthesizer and an impedance of the AC link according to the desired impedance.

10. The electrical power system (200, 300, 400) of claim 9, wherein the control system (150) is further configured to:

receive an indication of a current at input terminals of the impedance synthesizer (14);
determine, based on the current and the desired input impedance, an output voltage for emulating the desired impedance; and
control the switching operation of the plurality of power semiconductor switches ($141_{L,H}$, $142_{L,H}$) of the impedance synthesizer (14) according to the output voltage.

11. The electrical power system (200, 300, 400) of any one of claims 9 to 10, further comprising:

> a DC power source (203, 303, 403) connected to a DC side of the DC:AC converter circuit (11); and
> a DC electrical network (201, 202, 301, 401)) connected to a DC side of the AC:DC converter circuit (12),
> wherein the control system (150) is configured to monitor one or more operating parameters of the DC electrical network, and to determine the desired impedance based on the one or more operating parameters.

12. A method (500) of operating an electrical power system (200, 300, 400), the electrical power system comprising:

> a DC power source (203, 303, 403);
> a DC electrical network (201, 202, 301, 401);
> a DC:DC power converter (10) comprising a DC:AC converter circuit (11) connected, at a DC side, to the DC power source; an AC:DC converter circuit (12) connected, at a DC side, to the DC electrical network; an AC link (13) that connects an AC side of the DC:AC converter circuit to an AC side of the AC:DC converter circuit and has an impedance synthesizer (14) connected therein, the impedance synthesizer comprising an active bridge circuit (140); and
> a control system (150),
> the method (500) comprising:
>
> > determining (510), by the control system, a desired impedance for the AC link; and
> > controlling (540), by the control system, a switching operation of a plurality of power semiconductor switches ($141_{L,H}$, $142_{L,H}$) of the active bridge circuit to control an output voltage of the impedance synthesizer and an impedance of the AC link according to the desired impedance.

13. The method (500) of claim 13, wherein determining (510) the desired impedance comprises determining an operating mode of the electrical power system (100) and selecting one of a plurality of predetermined impedances according to the determined operating mode.

14. The method (500) of claim 13 or claim 14, further comprising:

> monitoring (550), by the control system (150), one or more operating parameters of the DC electrical network (201, 202, 301, 302),
> wherein the desired impedance for the AC link (13) is determined based on the one more operating parameters of the DC electrical network.

**FIG. 1A**

**FIG. 1B**

*FIG. 2A*

*FIG. 2B*

Electronics Impedance Tranferfunction $Z(s) = V3(s)/I1(s)$

*FIG. 3*

*FIG. 4*

*FIG. 5*

*FIG. 6A*

EP 4 576 538 A1

**FIG. 6B**

**FIG. 6C**

EP 4 576 538 A1

FIG. 7A

FIG. 7B

FIG. 7C

200

50

204 — GEN (HP)  GEN (LP) — 205

ESS — 203

206 — AC/DC  AC/DC  DC/DC — 10a

207

201

Engine Loads

DC/DC — 10b

Engine Loads

202

Platform Loads

Platform Loads

150

## FIG. 8A

300

301    308        309    310

303    10

## FIG. 8B

50    404    406    401    408    409    410

400

150

10

403

## FIG. 8C

*FIG. 9*

*FIG. 10*

| | Europäisches Patentamt<br>European Patent Office<br>Office européen des brevets | **EUROPEAN SEARCH REPORT** | **Application Number**<br><br>EP 24 21 7414 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2020/119653 A1 (MARIÉTHOZ<br>JEAN-SÉBASTIEN [CH] ET AL)<br>16 April 2020 (2020-04-16)<br>* paragraph [0028]; figures 4,5A, 7, 11 *<br>----- | 1-4 | INV.<br>H02M3/155<br>H02M1/15<br>H02M3/158<br>H02M3/335 |
| X | US 2017/279361 A1 (RAJU RAVISEKHAR<br>NADIMPALLI [US])<br>28 September 2017 (2017-09-28) | 1-13 | H02M7/501<br>H02M7/49 |
| A | * paragraphs [0028], [0029], [0031];<br>figure 3 *<br>----- | 14 | |
| A | US 2022/149751 A1 (KOJIMA TETSUYA [JP])<br>12 May 2022 (2022-05-12)<br>* paragraph [0005]; figure 1 *<br>----- | 1-14 | |
| A | US 2017/294847 A1 (XIE WEI [CN] ET AL)<br>12 October 2017 (2017-10-12)<br>* figure 1 *<br>----- | 1-14 | |

**TECHNICAL FIELDS<br>SEARCHED     (IPC)**

H02M

The present search report has been drawn up for all claims

| Place of search | Date of completion of the search | Examiner |
|---|---|---|
| The Hague | 15 April 2025 | Gusia, Sorin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 7414

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| US 2020119653 A1 | 16-04-2020 | AU 2017409798 A1 | 07-11-2019 |
| | | AU 2021240158 A1 | 28-10-2021 |
| | | CA 3059490 A1 | 18-10-2018 |
| | | CN 110741545 A | 31-01-2020 |
| | | EP 3610567 A1 | 19-02-2020 |
| | | US 2020119653 A1 | 16-04-2020 |
| | | WO 2018188720 A1 | 18-10-2018 |
| US 2017279361 A1 | 28-09-2017 | NONE | |
| US 2022149751 A1 | 12-05-2022 | EP 3975408 A1 | 30-03-2022 |
| | | JP 7146078 B2 | 03-10-2022 |
| | | JP WO2020235101 A1 | 14-10-2021 |
| | | US 2022149751 A1 | 12-05-2022 |
| | | WO 2020235101 A1 | 26-11-2020 |
| US 2017294847 A1 | 12-10-2017 | CN 107276378 A | 20-10-2017 |
| | | US 2017294847 A1 | 12-10-2017 |

For more details about this annex : see Official Journal of the European Patent Office, No. 12/82